# EUROPEAN PATENT SPECIFICATION

(11) **EP 2 591 962 B1**
(45) Date of publication and mention of the grant of the patent: **27.05.2015**
(21) Application number: 12191211.7
(22) Date of filing: 05.11.2012
(51) Int. Cl.: B60T 8/00, B62K 11/00, B62K 19/00, B62L 3/00

(54) **Motorcycle with ABS**
Motorrad mit ABS
Motocyclette avec ABS

(30) Priority: 10.11.2011 JP 2011246673
(43) Date of publication of application: 15.05.2013
(73) Proprietor: Honda Motor Co., Ltd., Tokyo 107-8556 (JP)
(72) Inventor: Takenouchi, Kazuya, Saitama, 351-0193 (JP); Saito, Satoshi, Saitama, 351-0193 (JP); Kojima, Kaoru, Saitama, 351-0193 (JP); Nakaie, Hirokatsu, Saitama, 351-0193 (JP)
(74) Representative: Ilgart, Jean-Christophe

(56) References cited:
- EP-A1- 1 803 637
- EP-A1- 2 213 536
- EP-A1- 2 284 071
- DE-A1-102004 034 226

## Description

### [Technical Field]

The present invention relates to a motorcycle.

### [Background Art]

Conventionally, an ABS module of an ABS (Antilock Brake System) which reduces a liquid pressure applied to a hydraulic brake is expensive and large and hence, the ABS module has been adopted by a motorcycle of large displacement where a module mounting space can be relatively easily ensured.

As a motorcycle which mounts the ABS module thereon, there has been known a motorcycle in which the ABS module is arranged in the inside of a storage box arranged on a side of a rear wheel (see patent literature 1, for example). By arranging the ABS module in this manner, the influence which the ABS module exerts on the layout of other parts can be decreased.

### [Citation List]

### [Patent Literature]

[Patent Literature 1] JP-A-2010-013066

The european patent document discloses also a motorcycle with an ABS according to the preamble of claim 1.

### [Summary of the Invention]

### [Problems that the Invention is to solve]

On the other hand, recently, the ABS module has become more inexpensive and more miniaturized than previously and hence, there has been a demand for the ABS module to be mounted on various types of vehicles. In this case, however, it is necessary to arrange the ABS module by taking the influence of heat and rain into consideration.

However, in the motorcycle described in patent document 1, it is necessary to provide the storage box in which the ABS module is arranged on the side of the rear wheel and hence, the storage box bulges outwardly and thereby considerably influences the appearance of the vehicle.

The present invention has been made in view of the above-mentioned drawbacks, and it is an object of the present invention to provide a motorcycle where an ABS module is arranged in a position where the ABS module scarcely influences the appearance of a vehicle while taking the influence of heat and rain into consideration.

### [Means for solving the problem]

To achieve the above-mentioned object, the invention according to claim 1 is directed to a motorcycle which includes: a vehicle body frame having a pair of left and right seat frames which support a seat; a storage box and a fuel tank which are arranged between the pair of left and right seat frames in order from a front side; a hydraulic brake which imparts a braking force to a wheel; an ABS module which reduces a liquid pressure applied to the hydraulic brake; and a straddling space formed between a handle and the seat, wherein the ABS module is arranged between the pair of left and right seat frames in a sandwiched position between the storage box and the fuel tank in the longitudinal direction.

The invention according to claim 2 is, in addition to the constitution described in claim 1, **characterized in that** the ABS module is housed in a recessed portion formed on a lower surface of the fuel tank on one side in the vehicle widthwise direction, and a fuel pump is housed in the inside of the fuel tank on the other side in the vehicle widthwise direction.

The invention according to claim 3 is, in addition to the constitution described in claim 2, **characterized in that** the hydraulic brake includes a front brake caliper which imparts a braking force to a front wheel and a rear brake caliper which imparts a braking force to a rear wheel, and the front brake caliper and the rear brake caliper are arranged on one side in the vehicle widthwise direction.

The invention according to claim 4 is, in addition to the constitution described in any one of claims 1 to 3, **characterized in that** a support stay for supporting the ABS module on the vehicle body frame is provided, joint members are provided to hydraulic pipes which are connected to the ABS module, and the joint members are supported on the support stay.

The invention according to claim 5 is, in addition to the constitution described in any one of claims 1 to 4, **characterized in that** a shock absorber which suspends a swing arm is mounted on the seat frame, and the ABS module is arranged in front of an upper end support hole of the shock absorber as viewed in a side view of the vehicle.

### [Advantage of the Invention]

According to the invention called for in claim 1, the ABS module is arranged between the pair of left and right seat frames in the sandwiched position between the storage box and the fuel tank in the longitudinal direction and hence, the ABS module can be arranged at a position where the ABS module is scarcely influenced by heat and rain and the ABS module minimally influences the appearance of the vehicle.

According to the invention called for in claim 2, the ABS module is housed in the recessed portion formed on the lower surface of the fuel tank on one side in the vehicle widthwise direction, and the fuel pump is housed in the inside of the fuel tank on the other side in the vehicle widthwise direction and hence, the vehicle can acquire the favorable weight balance, and also it is almost possible to prevent a shape of the fuel tank from becoming complicated.

According to the invention called for in claim 3, the front brake caliper and the rear brake caliper are arranged on one side in the vehicle widthwise direction and hence, lengths of pipes in a brake system can be shortened. Further, the pipes are arranged on one side in the vehicle widthwise direction and hence, the pipes can be arranged easily.

According to the invention called for in claim 4, the support stay for supporting the ABS module on the vehicle body frame is provided, the joint members are provided to the hydraulic pipes which are connected to the ABS module respectively, and the joint members are supported on the support stay. Accordingly, a sub assembly can be constituted of the support stay, the ABS module and the joint members. Accordingly, operability at the time of assembling on a manufacturing line can be enhanced.

According to the invention called for in claim 5, the ABS module is arranged in front of the upper end support hole of the shock absorber as viewed in a side view of the vehicle and hence, lengths of the pipes in the brake system can be shortened.

### [Brief Description of the Drawings]

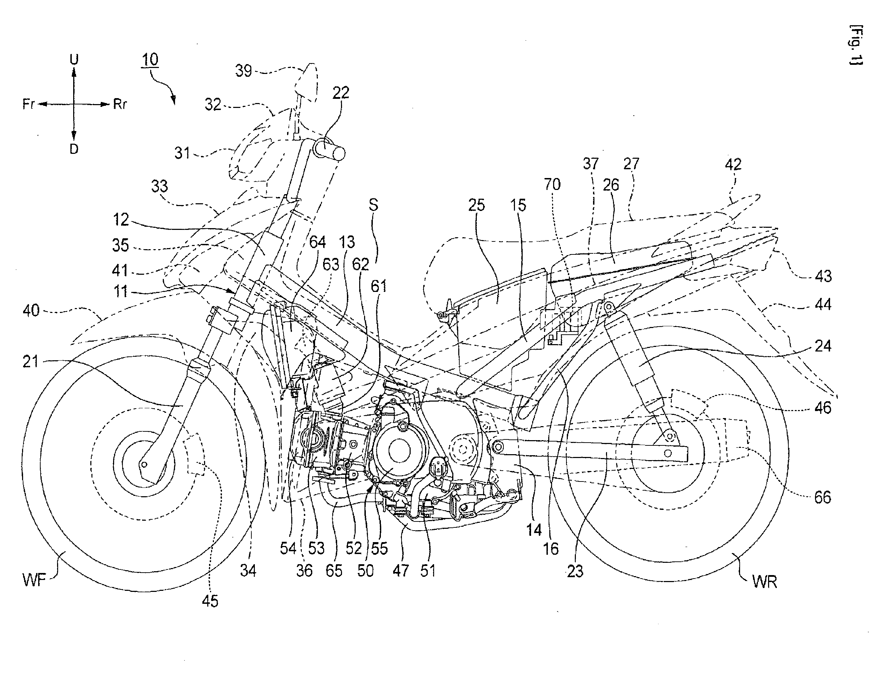

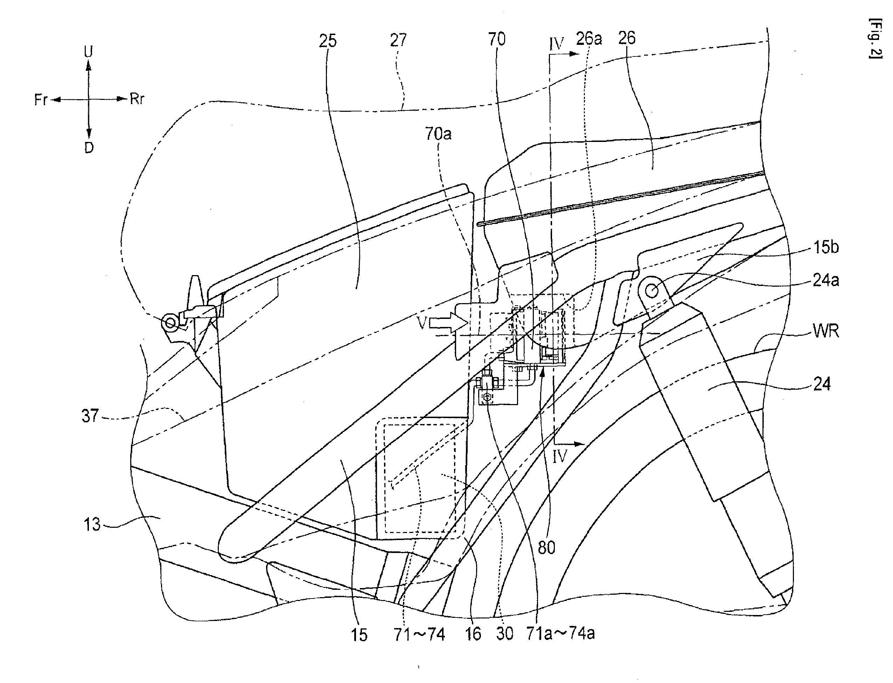

[Fig. 1]
   A left side view for explaining one embodiment of a motorcycle according to the present invention.
[Fig. 2]
   An enlarged left side view of a storage box and a fuel tank shown in Fig. 1, and an area around the storage box and the fuel tank.
[Fig. 3]
   An enlarged left side view of an ABS module shown in Fig. 2 and an area around the ABS module.
[Fig. 4]
   A cross-sectional view taken along a line IV-IV in Fig. 2.
[Fig. 5]
   A view of the ABS module shown in Fig. 2 and the area around the ABS module as viewed in the direction indicated by an arrow V.
[Fig. 6]
   A schematic view for explaining an ABS system of the motorcycle according to the present invention.

### [Mode for carrying out the Invention]

Hereinafter, one embodiment of a motorcycle according to the present invention is explained in detail in conjunction with drawings. Here, the drawings are viewed in the direction of symbols and, in the explanation made hereinafter, the directions of front, rear, left, right, up and down are set in accordance with directions as viewed from a rider, and a front side of a vehicle is indicated by Fr, a rear side of the vehicle is indicated by Rr, a left side of the vehicle is indicated by L, a right side of the vehicle is indicated by R, an upper side of the vehicle is indicated by U, and a down side of the vehicle is indicated by D in the drawings.

In a motorcycle 10 of this embodiment, as shown in Fig. 1, a vehicle body frame 11 is constituted of: a head pipe 12 which is provided on a front end of the vehicle body frame 11; a main frame 13 which extends downwardly and rearwardly from the head pipe 12; a pair of left and right pivot plates 14 which are connected to a rear end portion of the main frame 13 and extend downwardly; a pair of left and right seat frames 15 which are connected to an intermediate portion of the main frame 13 and extend upwardly and rearwardly; and a pair of left and right sub frames 16 which are connected to the rear end portion of the main frame 13, extend upwardly and rearwardly, and have rear end portions thereof connected to the seat frames 15. An engine 50 is mounted on the main frame 13 and the pivot plates 14.

Further, the motorcycle 10 includes: a front fork 21 which is steerably supported on the head pipe 12, a front wheel WF which is rotatably supported on a lower end portion of the front fork 21; a bar-shaped handle 22 which is mounted on an upper end portion of the front fork 21 and a rider manipulates at the time of steeling; a swing arm 23 which is rockably supported on the pair of left and right pivot plates 14; a rear wheel WR which is rotatably supported on a rear end portion of the swing arm 23; a shock absorber 24 which suspends the swing arm 23 from the seat frame 15; a storage box 25 and a fuel tank 26 which are arranged between the pair of left and right seat frames 15 in order from a front side; and a seat 27 which is openably and closably mounted on a front end portion of the storage box 25 and is supported on the pair of left and right seat frames 15. Further, a straddling space S is formed between the handle 22 and the seat 27.

In Fig. 1, numeral 31 indicates a headlight, numeral 32 indicates a handle cover, numeral 33 indicates a front cover, numeral 34 indicates a front side cover, numeral 35 indicates a leg shield, numeral 36 indicates an under side cover, numeral 37 indicates a rear side cover, numeral 39 indicates a side mirror, numeral 40 indicates a front fender, numeral 41 indicates a front blinker, numeral 42 indicates a grab rail, numeral 43 indicates a tail light, and numeral 44 indicates a rear fender.

The engine 50 is an air-cooled single cylinder engine. As shown in Fig. 1, the engine 50 includes: a crankcase 51; a cylinder block 52 which is mounted on a front end portion of the crankcase 51; a cylinder head 53 which is mounted on a front end portion of the cylinder block 52; a cylinder head cover 54 which is mounted on a front end portion of the cylinder head 53; a generator cover 55 which is mounted on a left side surface of the crankcase 51; and a clutch cover not shown in the drawing which is mounted on a right side surface of the crankcase 51. Further, the engine 50 is arranged below the main frame 13.

As shown in Fig. 1, a throttle body 62 is connected to an upper surface of the cylinder head 53 by way of an intake pipe 61, and an air cleaner 64 is connected to an upstream end of the throttle body 62 by way of a connecting pipe 63. A silencer 66 is connected to a lower surface of the cylinder head 53 by way of an exhaust pipe 65.

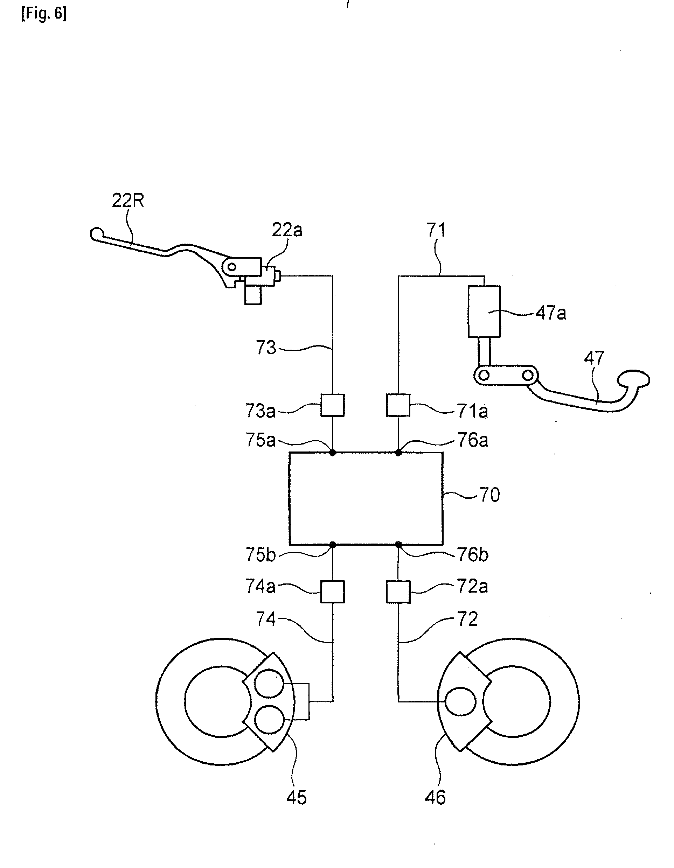

Further, the motorcycle 10 includes: a front brake caliper (hydraulic brake) 45 which imparts a braking force to the front wheel WF; a rear brake caliper (hydraulic brake) 46 which imparts a braking force to the rear wheel WR; a brake lever 22R which is mounted on a right end portion of the handle 22 and manipulates the front brake caliper 45 (see Fig. 6); a brake pedal 47 which is mounted on the pivot plate 14 on a right side of the vehicle and manipulates the rear brake caliper 46; and an ABS module 70 which reduces an oil pressure (liquid pressure) applied to the front brake caliper 45 and the rear brake caliper 46. The front brake caliper 45 and the rear brake caliper 46 are arranged on a right side in the vehicle widthwise direction. Fig. 6 shows an ABS system of the motorcycle 10 of this embodiment.

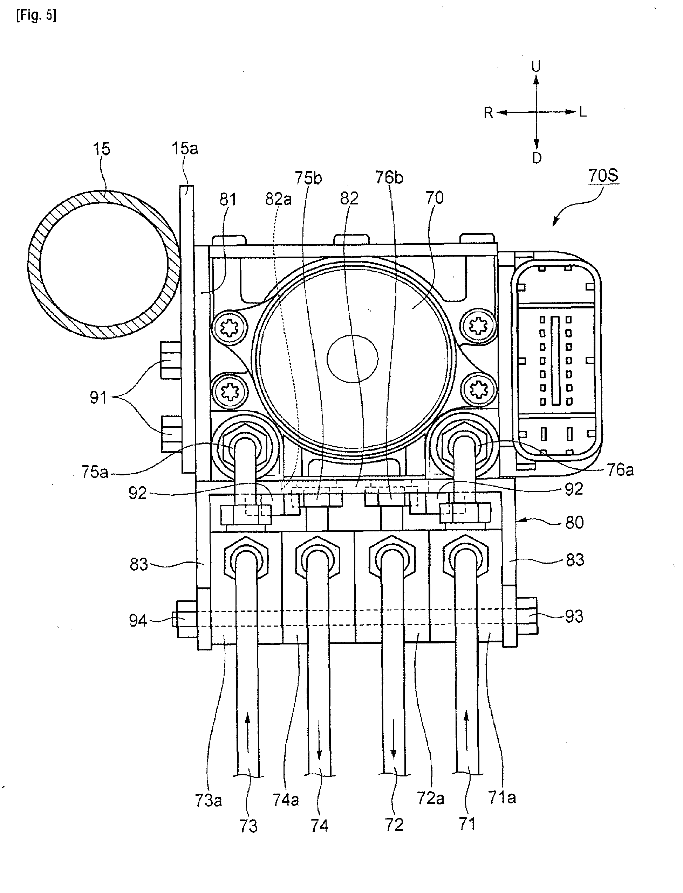

As shown in Fig. 2 to Fig. 6, a rear-wheel-side input pipe 71 through which an oil pressure from a master cylinder 47a of the brake pedal 47 is inputted is connected to a rear-wheel-side input part 76a on a left side of a front surface of the ABS module 70, while a rear-wheel-side output pipe 72 through which an oil pressure is outputted to the rear-brake caliper 46 is connected to a rear-wheel-side output part 76b on a left side of a lower surface of the ABS module 70. A front-wheel-side input pipe 73 through which an oil pressure from a master cylinder 22a of the brake lever 22R is inputted is connected to a front-wheel-side input part 75a on a right side of the front surface of the ABS module 70, while a front-wheel-side output pipe 74 through which an oil pressure is outputted to the front brake caliper 45 is connected to a front-wheel-side output part 75b on a right side of the lower surface of the ABS module 70. Further, the pipes 71 to 74 are respectively provided with joint members 71a to 74a.

In this embodiment, as shown in Fig. 2, the ABS module 70 is arranged between the pair of left and right seat frames 15 in a sandwiched position between the storage box 25 and the fuel tank 26 in the longitudinal direction. In Fig. 2, symbol 70a indicates an axis of a motor of the ABS module 70, and symbol 30 indicates a battery.

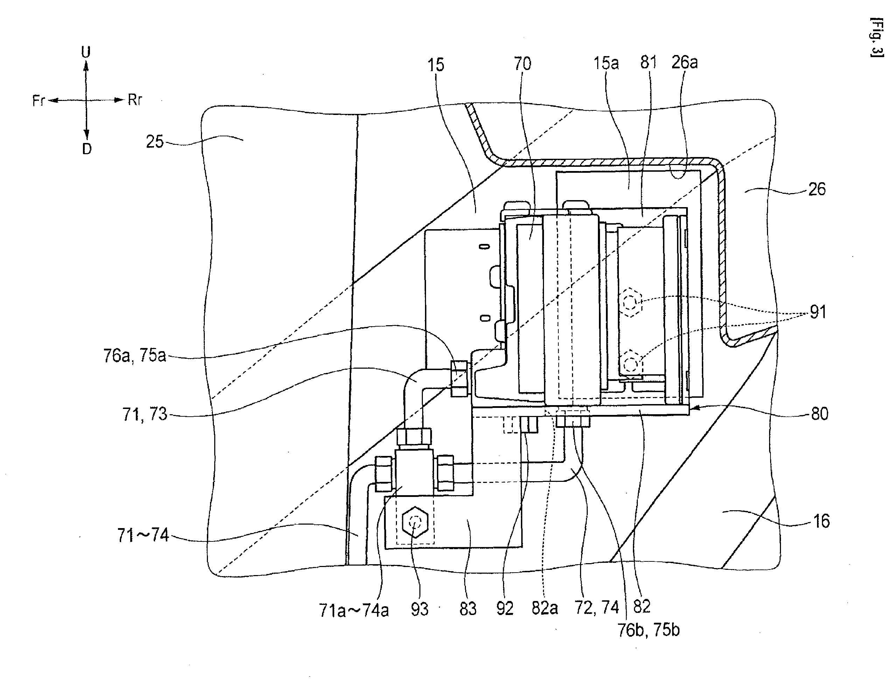

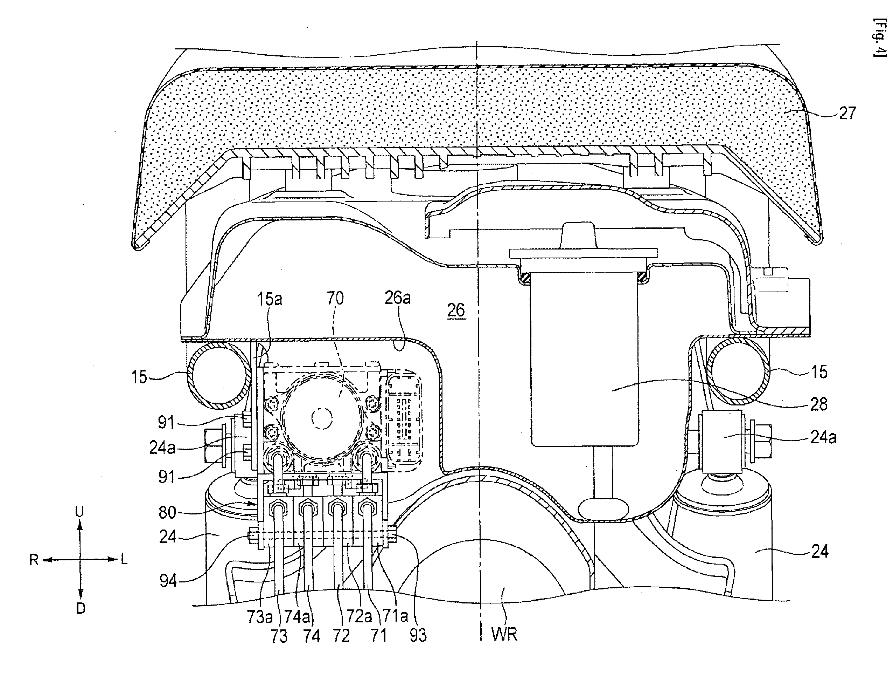

Further, as shown in Fig. 3 and Fig. 4, a recessed portion 26a is formed on a right side of a lower surface of a front portion of the fuel tank 26 in the vehicle widthwise direction, and a rear portion of the ABS module 70 is housed in the recessed portion 26a. Further, as shown in Fig. 4, a fuel pump 28 is housed in the inside of the fuel tank 26 on a left side in the vehicle widthwise direction (on a side opposite to the ABS module 70 in the vehicle widthwise direction) .

In this embodiment, as shown in Fig. 2, the ABS module 70 is arranged in front of an upper end support hole 24a of the shock absorber 24 as viewed in a side view of the vehicle. Further, the ABS module 70 is arranged below the upper end support hole 24a of the shock absorber 24. The upper end support hole 24a of the shock absorber 24 is supported on a bracket 15b which is connected to the seat frame 15 and the sub frame 16.

As shown in Fig. 2 to Fig. 5, the ABS module 70 and the joint members 71a to 74a of the pipes 71 to 74 are supported on a support stay 80 mounted on the seat frame 15 on a right side of the vehicle, and the support stay 80 is mounted on a support plate 15a which is fixed to an inner side of the seat frame 15 on the right side of the vehicle using two bolts 91. In this embodiment, the support stay 80, the ABS module 70, and the joint members 71a to 74a constitute the sub-assembly 70S.

The support stay 80 includes: a side plate 81 which is mounted on the support plate 15a, a bottom plate 82 which extends toward an inner side in the vehicle widthwise direction from a lower end portion of the side plate 81, and a pair of left and right support plates 83 which extend frontwardly from both ends of a front end portion of the bottom plate 82 in the vehicle widthwise direction and support four joint members 71a to 74a. Further, a quadrangular notched portion 82a is formed on the bottom plate 82 for avoiding the rear-wheel-side output pipe 72 and the front-wheel-side output pipe 74.

The ABS module 70 is mounted on the bottom plate 82 of the support stay 80 using two bolts 92. The four joint members 71a to 74a are mounted on the pair of left and right support plates 83 of the support stay 80 using one bolt 93 and one nut 94.

As has been explained heretofore, according to the motorcycle 10 of this embodiment, the ABS module 70 is arranged between the pair of left and right seat frames 15 at the position sandwiched between the storage box 25 and the fuel tank 26 in the longitudinal direction and hence, the ABS module 70 can be arranged at the position where the ABS module 70 is scarcely influenced by heat and rain and the ABS module 70 minimally influences the appearance of the vehicle 10.

Further, according to the motorcycle 10 of this embodiment, the ABS module 70 is housed in the recessed portion 26a formed on the right side of the lower surface of the front portion of the fuel tank 26 in the vehicle widthwise direction, and the fuel pump 28 is housed in the inside of the fuel tank 26 on the left side in the vehicle widthwise direction and hence, the vehicle 10 can acquire the favorable weight balance, and also it is almost possible to prevent a shape of the fuel tank 26 from becoming complicated.

Still further, according to the motorcycle 10 of this embodiment, the front brake caliper 45 and the rear brake caliper 46 are arranged on the right side in the vehicle widthwise direction and hence, lengths of the pipes 71 to 74 in the brake system can be shortened. Further, the pipes 71 to 74 are arranged on the right side in the vehicle widthwise direction and hence, the pipes can be arranged easily.

Still further, according to the motorcycle 10 of this embodiment, the support stay 80 for supporting the ABS module 70 on the vehicle body frame 11 is provided, the joint members 71a to 74a are provided to the pipes 71 to 74 which are connected to the ABS module 70 respectively, and the joint members 71a to 74a are supported on the support stay 80. Accordingly, the sub assembly 70S can be constituted of the support stay 80, the ABS module 70 and the joint members 71a to 74a. Accordingly, operability at the time of assembling on a manufacturing line can be enhanced.

Still further, according to the motorcycle 10 of this embodiment, the ABS module 70 is arranged in front of the upper end support hole 24a of the shock absorber 24 as viewed in a side view of the vehicle and hence, lengths of the pipes 71 to 74 in the brake system can be shortened.

### [Description of Reference Numerals and Signs]

- 10:: motorcycle
- 11:: vehicle body frame
- 15:: seat frame
- 22:: handle
- 23:: swing arm
- 24:: shock absorber
- 24a:: upper end support hole
- 25:: storage box
- 26:: fuel tank
- 26a:: recessed portion
- 27:: seat
- 28:: fuel pump
- 45:: front brake caliper (hydraulic brake)
- 46:: rear brake caliper (hydraulic brake)
- 70:: ABS module
- 71:: rear-wheel-side input pipe (hydraulic pipe)
- 71a:: joint member
- 72:: rear-wheel-side output pipe (hydraulic pipe)
- 72a:: joint member
- 73:: front-wheel-side input pipe (hydraulic pipe)
- 73a:: joint member
- 74:: front-wheel-side output pipe (hydraulic pipe)
- 74a:: joint member
- 80:: support stay
- WF:: front wheel
- WR:: rear wheel
- S:: straddling space

## Claims

1. A motorcycle comprising:
a vehicle body frame (11) having a pair of left and right seat frames (15) which support a seat (27);
a storage box (25) and a fuel tank (26) which are arranged between the pair of left and right seat frames in order from a front side;
a hydraulic brake (45, 46) which imparts a braking force to a wheel (WF, WR);
an ABS module (70) which reduces a liquid pressure applied to the hydraulic brake; and
a straddling space (S) formed between a handle (22) and the seat, **characterized in that**
the ABS module is arranged between the pair of left and right seat frames in a sandwiched position between the storage box and the fuel tank in the longitudinal direction.

2. The motorcycle according to claim 1, wherein the ABS module (70) is housed in a recessed portion (26a) formed on a lower surface of the fuel tank (26) on one side in the vehicle widthwise direction, and
a fuel pump (28) is housed in the inside of the fuel tank on the other side in the vehicle widthwise direction.

3. The motorcycle according to claim 2, wherein the hydraulic brake includes a front brake caliper (45) which imparts a braking force to a front wheel (WF) and a rear brake caliper (46) which imparts a braking force to a rear wheel (WR), and
the front brake caliper and the rear brake caliper are arranged on one side in the vehicle widthwise direction.

4. The motorcycle according to any one of claims 1 to 3, wherein
a support stay (80) for supporting the ABS module (70) on the vehicle body frame (11) is provided,
joint members (71a to 74a) are provided to hydraulic pipes (71 to 74) which are connected to the ABS module, and
the joint members are supported on the support stay.

5. The motorcycle according to any one of claims 1 to 4, wherein
a shock absorber (24) which suspends a swing arm (23) is mounted on the seat frame (15), and
the ABS module (70) is arranged in front of an upper end support hole (24a) of the shock absorber as viewed in a side view of the vehicle

## Patentansprüche

1. Motorrad umfassend:
einen Fahrzeugkarosserierahmen (11), welcher ein Paar von linken und rechten Sitzrahmen (15) aufweist, welche einen Sitz (27) tragen;
einen Aufbewahrungskasten (25) und einen Brennstofftank (26), welche zwischen dem Paar von linken und rechten Sitzrahmen in einer Reihenfolge von einer Frontseite aus angeordnet sind;
eine hydraulische Bremse (45, 46), welche eine Bremskraft auf ein Rad (WF, WR) überträgt;
ein ABS-Modul (70), welches einen an der hydraulischen Bremse applizierten Flüssigkeitsdruck reduziert; und
einen Grätschraum (S), welcher zwischen einem Handgriff (22) und dem Sitz ausgebildet ist,
**dadurch gekennzeichnet, dass** das ABS-Modul zwischen dem Paar von linken und rechten Sitzrahmen in einer Sandwichposition zwischen dem Aufbewahrungskasten und dem Brennstofftank in der Longitudinalrichtung angeordnet ist.

2. Motorrad nach Anspruch 1, wobei das ABS-Modul (70) in einem ausgesparten Teilabschnitt (26a), welcher an einer unteren Fläche des Brennstofftanks (26) ausgebildet ist, auf einer Seite in der Richtung des Fahrzeugs der Breite nach, aufgenommen ist, und
eine Brennstoffpumpe (28) im Inneren des Brennstofftanks an der anderen Seite in der Richtung des Fahrzeugs der Breite nach aufgenommen ist.

3. Motorrad nach Anspruch 2, wobei die hydraulische Bremse einen Frontbremssattel (45), welcher eine Bremskraft auf ein Vorderrad (WF) überträgt und einen Heckbremssattel (46) umfasst, welcher eine Bremskraft auf ein Hinterrad (WR) überträgt, und wobei
der Frontbremssattel und der Heckbremssattel auf einer Seite in der Richtung des Fahrzeugs der Breite nach angeordnet sind.

4. Motorrad nach einem der Ansprüche 1 bis 3, wobei
eine Tragestrebe (80) zum Tragen des ABS-Moduls (70) an dem Fahrzeugkarosserierahmen (11) vorgesehen ist,
Verbindungselemente (71 a bis 74a) an Hydraulikleitungen (71 bis 74) vorgesehen sind, welche mit dem ABS-Modul verbunden sind, und die Verbindungselemente an der Tragestrebe getragen sind.

5. Motorrad nach einem der Ansprüche 1 bis 4, wobei
ein Stoßdämpfer (24), welcher einen Schwenkarm (23) aufhängt, an dem Sitzrahmen (15) montiert ist, und
das ABS-Modul (70) vor, in einer Seitenansicht des Fahrzeuges gesehen, einem Oberende-Trageloch (24a) des Stoßdämpfers angeordnet ist.

## Revendications

1. Motocyclette comprenant :
un châssis de véhicule (11) ayant une paire de châssis de siège gauche et droit (15) qui supportent un siège (27) ;
une boîte de stockage (25) et un réservoir de carburant (26) qui sont agencés entre la paire de châssis de siège gauche et droit dans l'ordre à partir d'un côté avant ;
un frein hydraulique (45, 46) qui communique une force de freinage à une roue (WF, WR) ;
un module ABS (70) qui réduit une pression de liquide appliquée sur le frein hydraulique ; et
un espace de chevauchement (S) formé entre un guidon (22) et le siège, **caractérisé en ce que** :
le module ABS est agencé entre la paire de châssis de siège gauche et droit dans une position prise en sandwich entre la boîte de stockage et le réservoir de carburant dans la direction longitudinale.

2. Motocyclette selon la revendication 1, dans laquelle le module ABS (70) est logé dans une partie évidée (26a) formée sur une surface inférieure du réservoir de carburant (26) sur un côté dans le sens de la largeur du véhicule, et
une pompe à carburant (28) est logée à l'intérieur du réservoir de carburant de l'autre côté dans le sens de la largeur du véhicule.

3. Motocyclette selon la revendication 2, dans laquelle le frein hydraulique comprend un étrier de frein avant (45) qui communique une force de freinage à une roue avant (WF) et un étrier de frein arrière (46) qui communique une force de freinage à une roue arrière (WR), et
l'étrier de frein avant et l'étrier de frein arrière sont agencés sur un côté dans le sens de la largeur du véhicule.

4. Motocyclette selon l'une quelconque des revendications 1 à 3, dans laquelle :
on prévoit un tirant de support (80) pour supporter le module ABS (70) sur le châssis de véhicule (11),
des éléments de joint (71a à 74a) sont prévus pour les tuyaux hydrauliques (71 à 74) qui sont raccordés au module ABS, et
les éléments de joint sont supportés sur le tirant de support.

5. Motocyclette selon l'une quelconque des revendications 1 à 4, dans laquelle :
un amortisseur (24) qui suspend un bras oscillant (23) est monté sur le châssis de siège (15), et
le module ABS (70) est agencé en face d'un trou de support d'extrémité supérieure (24a) de l'amortisseur, comme observé sur une vue latérale du véhicule.
